# EUROPÄISCHE PATENTSCHRIFT

(11) **EP 0 764 943 B1**
(45) Veröffentlichungstag und Bekanntmachung des Hinweises auf die Patenterteilung: **10.04.2002**
(21) Anmeldenummer: 96114591.9
(22) Anmeldetag: 12.09.1996
(51) Int. Cl.: G11B 5/49, G11B 15/12, G11B 5/09

(54) **Verfahren zur Aufzeichnung von digitalen Signalen auf einem Magnetband in Multilängsspuren sowie Magnetbandaufzeichnungsgerät zur Durchführung des Verfahrens**
Method for recording digital signals in multiple tracks onto a magnetic tape and magnetic recording apparatus for implementing this method
Procédé pour l'enregistrement de signaux numériques dans une bande magnétique avec multipistes et appareil d'enregistrement pour la mise en oeuvre de ce procédé

(30) Priorität: 21.09.1995 DE 19535089
(43) Veröffentlichungstag der Anmeldung: 26.03.1997
(73) Patentinhaber: DEUTSCHE THOMSON-BRANDT GMBH, 78048 Villingen-Schwenningen (DE)
(72) Erfinder: Kaaden, Jürgen, 78052 Villingen-Schwenningen (DE)

(56) Entgegenhaltungen:
- EP-A- 0 340 085
- EP-A- 0 425 064
- EP-A- 0 481 875
- WO-A-94/15332
- DE-B- 1 193 994
- US-A- 5 343 337
- US-A- 5 412 518
- PATENT ABSTRACTS OF JAPAN vol. 010, no. 348 (P-519), 22.November 1986 & JP-A-61 148607 (MATSUSHITA ELECTRIC IND CO LTD), 7.Juli 1986,
- JOURNAL OF MAGNETICS SOCIETY OF JAPAN, Bd. 15, Nr. S1, 1991, Seiten 389-394, XP000612909 F. MAURICE: "Towards the multitrack digital video tape recorder"

## Beschreibung

Bei digitalen Magnetbandaufzeichnungssystemen für Audio-, Videooder Datensignale sind Verfahren der Schrägspuraufzeichnung wie auch der Längsspuraufzeichnung bekannt. Bei der Längsspuraufzeichnung gewinnt zunehmend die Multispuraufzeichnung an Bedeutung. Hier ist neben den klassischen Formaten S-DAT und DCC ein neuartiges Format zu erwähnen, das über einen in Dünnfilmtechnologie erstellten Kopf eine simultanes, flächenartiges Beschreiben von bis zu 2000 Spuren gestattet. Dieses System ist als SDVCR bekannt. Das Potential dieses Systems ist in der Kombination mit einem optischen Lesesystem besonders groß, da geringe Spurbreiten von 2µm erreichbar sind und die Speicherdichte gegenüber heutigen Systemen vervielfacht werden kann.

Aus der Veröffentlichung von Francouis Maurice "Towards the Multitrack Digital Video Tape Recorder", J. Magn. Soc. Jpn, Vol 15, Sup No 51(1991) Seite 389-394 ist ein Verfahren zur Aufzeichnung von digitalen Signalen auf einem Magnetband in Multilängsspuren mittels in einer Matrix angeordneten Schreibköpfen bekannt. Die Matrix umfaßt einen in Längs- und Querrichtung genuteten Ferritblock, auf den eine Dünnfilmstruktur aufgebracht ist, die die magnetisch wirksamen Spalte beinhaltet. Werden die in den Nuten eingelassenen Wicklungen stromdurchflossen, so wird ein Magnetfeld durch den Summenfluß in allen Ferritschenkeln erzeugt. Dieser Fluß schließt sich primär über die Spaltzone und magnetisiert ein über der Spaltzone befindliches Magnetband. Der Ferritblock vereint viele Köpfe, die in einem Prozeß gemeinsam hergestellt werden.

Durch geschaltete Ströme und zeitlich richtige Zuordnung von Strömen in Zeilen- und Spaltenrichtung kann ein Magnetfeld in jedem individuellen Spalt erzeugt werden. Hierzu wird einem an den Datenkanälen angelegten Signal, das Wicklungsströme in den Zeilen auslöst, ein schnell geschalteter Selektierungsstrom in den Spalten zuaddiert. Der Wert des aus den Wicklungsströmen resultierenden magnetischen Flusses ist so gewählt, daß erst der Summenstrom aus Zeilen- und Spalten das Magnetband remanent magnetisieren kann. Sofern das Selektierungssignal schnell genug gewählt ist, werden durch die gespeicherte Energie in der Induktivität und die Struktur der auf dem Band magnetisierten Domänen die durch die Stromlücken erwarteten Magnetisierungseinbrüche nicht störend in Erscheinung treten. Das Selektierungssignal kann somit für verschiedene Datenleitungen im Zeitmultiplexverfahren genutzt werden.

Die bei der Herstellung von Schreibköpfen in mehreren, voneinander getrennten Fertigungsschritten sowie bei der Montage dieses sogenannten Matrixkopfes entstehenden Toleranzen führen zu recht unterschiedlicher Qualität der einzelnen Schreibköpfe. Bei unterschiedlichen magnetischen Eigenschaften der Schreibköpfe einer Matrix aus Ferritblock und aufgesetztem Dünnfilmspalt können Störungen durch Streuflüsse auftreten.

Ein Verfahren zum Aufzeichnen von digitalen Signalen auf einem Magnetband nach dem Oberbegriff des Anspruchs 1 ist aus der WO 94/15332 bekannt. Eine Abspeicherung von Werten der Magnetisierungsströme von Schreibköpfen in einem digitalen Speicher zur Einstellung eines Arbeitspunktes ist aus Patent Abstracts of Japan Vol. 010, no. 348 (P-519), 22.11.1986 & JP-A-61 148 607 bekannt.

Der Erfindung liegt die Aufgabe zugrunde, ein Verfahren zur Aufzeichnung von digitalen Signalen auf einem Magnetband in Multilängsspuren mittels in einer Matrix angeordneten Schreibköpfen sowie ein Magnetbandaufzeichnungsgerät zur Durchführung des Verfahrens dahingehend zu verbessern, daß unterschiedliche magnetische Eigenschaften der Schreibköpfe einer Matrix kompensiert werden.

Diese Aufgabe wird bei einem Verfahren nach dem Oberbegriff des Anspruchs 1 und einem Magnetbandaufzeichnungsgerät nach dem Oberbegriff des Anspruchs 7 durch die im jeweiligen kennzeichnenden Teil der Ansprüche angegebenen Merkmale gelöst.

Der Erfindung liegen folgende Überlegungen zugrunde. Die Wiedergabeamplitude als Funktion des magnetischen Flusses im Spalt des Schreibkopfes steigt bei den heute verwendeten Magnetbändern der Typen ME (Metal Evaporated) sowie "advanced" MP (Metal Particle) mit zunehmendem magnetischen Fluß zunächst an, erreicht ein Maximum und geht unter einem anfangs leichten Rückgang in einen flachen Abschnitt über. Das Übersprechen von einer Spur zur benachbarten Spur als Funktion des magnetischen Flusses im Spalt des Schreibkopfes steigt mit zunehmendem magnetischen Fluß überproportinal an. Eine Zunahme des magnetischen Flusses ist für die Wiedergabeamplitude somit recht unkritisch, führt aber zu einer Erhöhung des magnetischen Übersprechens.

In der Praxis ist der optimale Bereich des magnetischen Flusses, bei dem das Übersprechen noch tolerierbar ist, sehr schmal, so daß der Arbeitspunkt des Schreibkopfes sehr genau eingehalten werden muß. Da der magnetische Fluß im Spalt des Schreibkopfes sowohl vom Magnetisierungsstrom als auch von den fertigungsbedingten magnetischen Eigenschaften der Schreibköpfe abhängt, ist es schwierig einen Magnetisierungsstrom festzulegen, bei dem noch alle Schreibköpfe mit ihren Arbeitspunkten im optimalen Bereich liegen. Bei bisherigen Lösungen mußten daher vorselektierte Anordnungen aus Schreibköpfen mit weitgehend identischen magnetischen Eigenschaften eingesetzt werden. An dieser Stelle setzt die erfindungsgemäße Lösung an, die eine Verwendung von in einer Matrix angeordneten Schreibköpfen mit streuenden magnetischen Eigenschaften der einzelnen Schreibköpfe, wie sie typischerweise in einer Großserienfertigung auftreten, zuläßt.

Dies geschieht dadurch daß für jeden einzelnen Schreibkopf in Vorversuchen ein individueller Magnetisierungsstrom ermittelt wird, für den der Arbeitspunkt des Schreibkopfes im optimalen Bereich liegt. Die ermittelten Werte dieser individuellen Magnetisierungsströme werden gespeichert und bei Selektion der Schreibköpfe, also bei Ansteuerung mit Datensignalen, werden die selektierten Schreibköpfe mit ihrem individuellen Magnetisierungsstrom bestromt. Dadurch werden unterschiedliche magnetische Eigenschaften der Schreibköpfe eine Matrix elektronisch kompensiert.

Bei einem Magnetbandaufzeichnungsgerät zur Durchführung des Verfahrens erfolgt die Speicherung der Werte mittels Speichern, die mit einem Steuereingang einer den Zeilen und Spalten zugeordneten steuerbaren Stromquelle verbunden sind. Bei den Stromquellen handelt es sich vorzugsweise um steuerbare Konstantstromquellen.

Die Speicher sind vorzugsweise digitale Speicher mit einem nachgeschalteten Analog/Digital-Wandler, sofern die Stromquellen analoge Steuereingänge besitzen.

Als Speicher sind nichtflüchtige Speicher geeignet, wie z. B. PROMs, batteriegepufferte RAMs, ferromagnetische RAMs oder EEPROMs.

Zusätzlich werden in Vorversuchen ermittelte Werte von Kompensationsströmen in benachbarten Schreibköpfen gespeichert werden und bei Selektion einer der Schreibköpfe werden die benachbarten Schreibköpfe mit den gespeicherten Werten der Kompensationsströme bestromt. Dadurch läßt sich das magnetische Übersprechen auch unter Berücksichtigung unterschiedlicher magnetischer Eigenschaften der Schreibköpfe weiter verringern.

Bei der Speicherung der Magnetisierungs- und auch Kompensationsströme sind drei Alternativen möglich. So können ausschließlich die Werte der Zeilenströme bei konstanten Spaltenströmen oder ausschließlich die Werte der Spaltenströme bei konstanten Zeilenströmen oder sowohl die Werte der Zeilenströme als auch die Werte der Spaltenströme gespeichert werden. Die ersten beiden Alternativen vermindern zwar den Aufwand an Speicherbausteinen, ermöglichen aber nicht immer eine vollständige Kompensation. Ihre Anwendung ist nur für eine geringe Anzahl von Spalten oder Zeilen brauchbar. Bevorzugt ist daher die dritte Alternative, die auch bei einer Vielzahl von Zeilen und Spalten eine vollständige Kompensation ermöglicht.

Die Werte können der Zeilen- und/oder Spaltenströme können als Absolutwerte oder relative Abweichungen von einem Grundwert gespeichert werden. Bei der zweiten Variante kann der Grundwert durch einen Mittelwert oder einen unter Grenzwert oder einen oberen Grenzwert gebildet sein.

Während die Speicherung von Absolutwerten eine hohe Auflösung und damit eine hohe Speicherkapazität für jeden gespeicherten Wert erfordert, kommt die Speicherung von Abweichungen und einem Grundwert, insbesondere bei geringen Abweichungen mit einer geringeren Speicherkapazität aus. Darüber hinaus erlaubt die zweite Variante eine einfache Nachjustierung bei alterungsbedingten Änderungen der magnetischen Eigenschaften der Schreibköpfe oder Anpassungen an anderes Bandmaterial, indem nur der Grundwert geändert wird. Dabei wird vorausgesetzt, daß sich die magnetischen Eigenschaften der Schreibköpfe relativ zueinander nicht ändern.

Die Grundwerte mit den Abweichungen können digital vor der Digital/Analog-Wandlung oder analog nach der Digital/Analog-Wandlung addiert werden.

Bei dem Magnetbandaufzeichnungsgerät bilden die in der Matrix angeordneten Schreibköpfe mit den steuerbaren Stromquellen, den Speichern und der Steuerschaltung eine Baueinheit, bei der die Schreibköpfe auf der dem Magnetband zugewandten Seite und die Stromquellen, Speicher und die Steuerschaltung auf der dem Magnetband abgewandten Seite angeordnet sind. Hierdurch lassen sich die Baugruppen, die zur Steuerung der Schreibköpfe dienen diesen direkt zuordnen und verschalten, so daß sowohl kurze Stromwege bestehen, als auch eine eindeutige Zuordnung der Speicher zu den Spalten und Zeilen der Matrix beim Einbau der Baueinheit gewährleistet ist.

Nachfolgend wird die Erfindung anhand der Zeichnung erläutert. In dieser zeigen:
- Fig. 1: eine perspektivische Darstellung einer Matrix mit Schreibköpfen,
- Fig. 2: eine Prinzipdarstellung einer Steuereinheit mit in einer Matrix angeordneten Schreibköpfen,
- Fig. 3: ein Diagramm mit einer qualitativen Darstellung der Wiedergabeamplitude als Funktion des Magnetisierungsstromes
- Fig. 4: ein Diagramm mit einer qualitativen Darstellung des magnetischen Übersprechens als Funktion des Magnetisierungsstromes und
- Fig. 5: ein Blockschaltbild der Steuereinheit aus Fig. 2

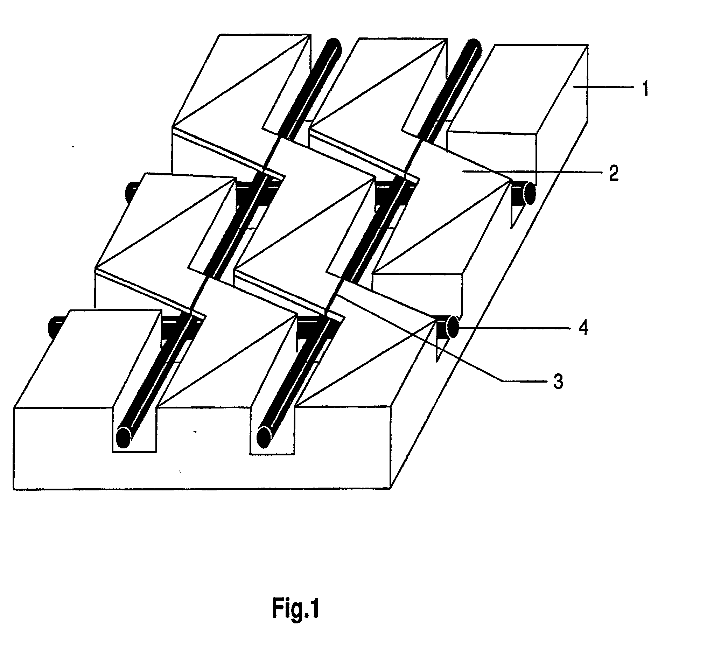

Fig. 1 zeigt eine perspektivische Darstellung einer Matrix mit Schreibköpfen. Diese werden in einem Fertigungsprozeß gemeinsam hergestellt. Auf einem in Längs- und Quer-Richtung genuteten Ferritblock 1 ist eine Dünnfilmstruktur 2 aufgebracht, die die magnetisch wirksamen Spalte 3 beinhaltet. In die Nuten sind Wicklungen 4 eingelassen und bilden Zeilen und Spalten einer Matrix. Werden die Wicklungen 4 stromdurchflossen, so wird ein Magnetfeld durch den Summenfluß in allen Ferritschenkeln erzeugt. Dieser Fluß schließt sich primär über die Spaltzone und magnetisiert ein über der Spaltzone befindliches Magnetband. Durch geschaltete Ströme und zeitlich richtige Zuordnung von Strömen in Zeilen- und Spaltenrichtung kann ein Magnetfeld in jedem individuellen Spalt 3 erzeugt werden.

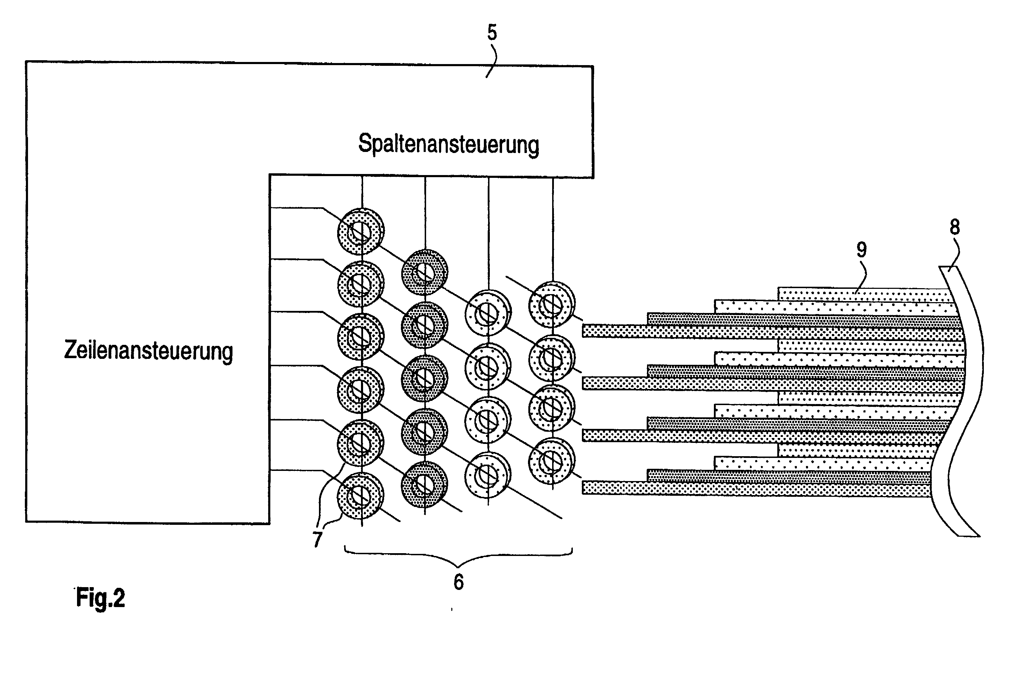

Fig. 2 zeigt eine Prinzipdarstellung einer Steuereinheit 5 mit in einer Matrix 6 angeordneten Schreibköpfen 7. Rechts neben den Schreibköpfen 7 ist ein Teil eines Magnetbandes 8 dargestellt, auf dem die von den Schreibköpfen geschriebenen Spuren 9 angedeutet sind. Die Schreibköpfe 7 werden von der Steuereinheit 5 zeilen- und spaltenweise bestromt. Der Wert des aus den Wicklungsströmen resultierenden magnetischen Flusses ist so gewählt, daß erst der Summenstrom aus Zeilen- und Spalten das Magnetband 8 ausreichend d. h. remanent magnetisieren kann.

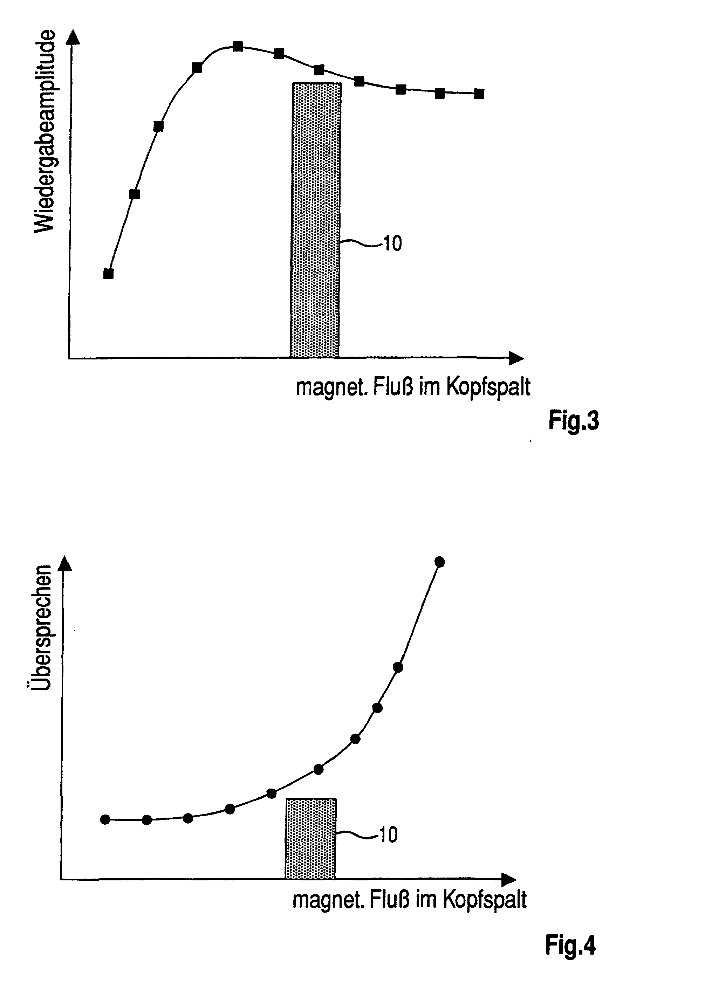

Fig. 3 zeigt ein Diagramm mit einer qualitativen Darstellung der Wiedergabeamplitude als Funktion des magnetischen Flusses im Spalt eines Schreibkopfes, wobei der magnetische Fluß wiederum eine Funktion des Magnetisierungsstromes ist. Die Wiedergabeamplitude steigt mit zunehmendem magnetischen Fluß zunächst an, erreicht ein Maximum und geht dann bei anfangs leichtem Rückgang in einen flachen Abschnitt über.

Fig. 4 zeigt ein Diagramm mit einer qualitativen Darstellung des magnetischen Übersprechens als Funktion des magnetischen Flusses im Spalt eines Schreibkopfes, wobei der magnetische Fluß wiederum eine Funktion des Magnetisierungsstromes ist. Das Übersprechen von einer Spur zur benachbarten Spur steigt mit zunehmendem magnetischen Fluß überproportional an.

Zur Erzielung einer hohen Wiedergabeamplitude bei gleichzeitig noch tolerierbarem magnetischen Übersprechen wird ein Bereich des magnetischen Flusses gewählt, der hinsichtlich der Wiedergabeamplitude bereits im flachen Abschnitt liegt und hinsichtlich des magnetischen Übersprechens noch nicht im steil ansteigenden Abschnitt liegt. Dieser optimale Bereich ist in den Fig. 3 und 4 als 10 markiert.

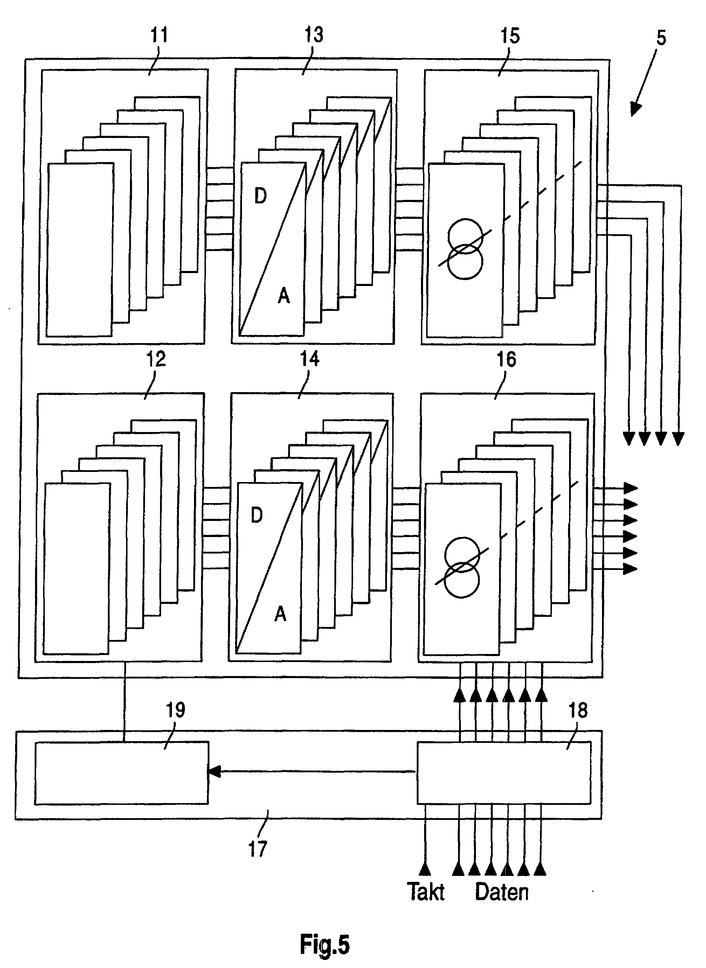

Um bei streuenden magnetischen Eigenschaften der einzelnen Schreibköpfe 7, wie sie typischerweise in einer Großserienfertigung auftreten, einheitliche Arbeitspunkte innerhalb des optimalen Bereichs 10 einzuhalten, ist eine Steuereinheit 5 gemäß Fig. 5 vorgesehen, mittels der unterschiedliche magnetische Eigenschaften der Schreibköpfe 7 einer Matrix 6 elektronisch kompensiert werden.

Die Steuereinheit 5 umfaßt für jede Zeile und Spalte eine steuerbare Konstantstromquelle 16, 15, deren Steuereingang über einen Digital/Analog-Wandler 14, 13 mit dem Ausgang eines digitalen, nicht flüchtigen Speichers 12, 11 verbunden ist und ferner eine gemeinsame Steuerschaltung 17 mit einem Datenpuffer 18 und einem Zähler 19. In den Speichern 11, 12 sind diejenigen Werte gespeichert, welche in einem vorangegangenen Einstellvorgang individuell für jeden Schreibkopf 7 ermittelt wurden. Kriterien für die ermittelte Werte sind einheitliche Arbeitspunkte, also gleiche magnetische Flüsse der Spalte der Schreibköpfe 7 hinsichtlich des Wiedergabeausgangssignals und des magnetischen Übersprechens. Zusätzlich werden auch die Werte eventuell notwendiger inverser Übersprechkompensationsströme benachbarter Schreibköpfe ermittelt.

Da die Werte für den Magnetisierungsstrom und den Kompensationsstrom für jeden einzelnen Schreibkopf in den nichtflüchtigen Speichern 11, 12 abgelegt werden, ergibt sich eine eindeutige Paarung von Schreibkopf 7 und Wertespeicher 11, 12. Die gespeicherten Werte können Absolutwerte oder Abweichungen von einem Grundwert sein. Der Grundwert kann digital oder analog zuaddiert werden. Hierbei kann der Grundwert entweder der untere Stromgrenzwert, der Stromgrenzmittelwert oder der maximale Stromgrenzwert sein.

Die aufzuzeichnenden digitalen Signale sowie ein Takt werden dem Eingang eines Pufferspeichers 18 zugeführt. Die Ausgänge des Pufferspeichers 18 selektieren die den Zeilen zugeordneten Stromquellen. Der jeweilige Wert der Zeilenkomponente des Magnetisierungsstromes wird über die den Zeilen zugeordneten Speicher 12 festgelegt, die über ihre Digital/Analog-Wandler 14 die steuerbaren Stromquellen 16 der Zeilen steuern. Die Ausgänge des Zählers 19 selektieren die den Spalten zugeordneten Stromquellen 15. Der jeweilige Wert der Spaltenkomponente des Magnetisierungsstromes wird über die den Spalten zugeordneten Speicher 11 festgelegt, die über ihre Digital/Analog-Wandler 13 die steuerbaren Stromquellen 15 der Spalten steuern. Die Summe aus Zeilen- und Spaltenkomponente ergibt den Magnetisierungsstrom des jeweiligen Schreibkopfes sowie die Kompensationsströme der benachbarten Schreibköpfe.

Der Wert des magnetischen Flusses in den Spalten der Schreibköpfe kann sich durch Alterung und Abnutzung ändern, was ohne Einfluß auf die Toleranzen der Schreibköpfe untereinander ist. Um diese Erscheinung auszugleichen kann eine Änderung des Absolutwertes des Magnetisierungsstromes erforderlich sein. Dies kann durch Veränderung der Stromquellencharakteristik erfolgen oder bei Speicherung eines Grundwertes und Abweichungen vom Grundwert auch durch Änderung des Grundwertes.

## Patentansprüche

1. Verfahren zur Aufzeichnung von digitalen Signalen auf einem Magnetband (8) in Multilängsspuren (9) mittels in einer Matrix (6) angeordneten Schreibköpfen (7), die in Abhängigkeit der digitalen Signale im Multiplexbetrieb derart zeilen- und spaltenweise bestromt werden,- daß das ausschließlich aus Zeilen- oder Spaltenströmen in den bestromten Schreibköpfen (7) resultierende Magnetfeld jeweils unterhalb der Koerzitivfeldstärke des Magnetbandes (8) liegt, während das aus gleichsinnig überlagerten Zeilen- und Spaltenströmen in den jeweils selektierten bestromten Schreibköpfen (7) resultierende Magnetfeld oberhalb der Koerzitivfeldstärke des Magnetbandes (8) liegt und magnetisierte Domänen erzeugt, **dadurch gekennzeichnet, daß** für jeden Schreibkopf (7) ein in Vorversuchen ermittelter Wert des Magnetisierungsstromes aus gleichsinnig überlagerten Zeilen- und Spaltenströmen zur Einhaltung eines gewünschten Arbeitspunktes gespeichert (11, 12) wird und die Schreibköpfe (7) bei Selektion mit den ihnen zugeordneten gespeicherten Werten des Magnetisierungsstromes bestromt werden, und daß zusätzliche in Vorversuchen ermittelte Werte von Kompensationsströmen in benachbarten Schreibköpfen (7) gespeichert werden und bei Selektion einer der Schreibköpfe (7) die benachbarten Schreibköpfe (7) mit den gespeicherten Werten der Kompensationsströme bestromt werden.

2. Verfahren nach Anspruch 1, **dadurch gekennzeichnet, daß** ausschließlich die Werte der Zeilenströme bei konstanten Spaltenströmen oder ausschließlich die Werte der Spaltenströme bei konstanten Zeilenströmen oder sowohl die Werte der Zeilenströme als auch die Werte der Spaltenströme gespeichert werden.

3. Verfahren nach Anspruch 2, **dadurch gekennzeichnet, daß** die Werte der Zeilen- und/oder Spaltenströme als Absolutwerte gespeichert werden.

4. Verfahren nach Anspruch 2, **dadurch gekennzeichnet, daß** die Werte der Zeilen- und/oder Spaltenströme als relative Abweichungen von einem Grundwert gespeichert werden.

5. Verfahren nach Anspruch 4, **dadurch gekennzeichnet, daß** der Grundwert durch einen Mittelwert oder einen unteren Grenzwert oder einen oberen Grenzwert gebildet wird.

6. Verfahren nach einem der Ansprüche 1 bis 5, **dadurch gekennzeichnet, daß** die Werte digital gespeichert und in analoge Werte zur Steuerung von Stromquellen (15, 16) umgewandelt werden.

7. Magnetbandaufzeichnungsgerät zur Durchführung des Verfahrens nach Anspruch 1, **dadurch gekennzeichnet, daß** jeder Zeile und/oder jeder Spalte der in einer Matrix (6) angeordneten Schreibköpfe (7) eine steuerbare Stromquelle (15, 16) und einen mit einem Steuereingang der Stromquelle (15, 16) verbundener Speicher (11, 12) für einen Stromwert zugeordnet ist und daß eine Steuerschaltung (17) vorgesehen ist, mittels der in Abhängigkeit der aufzuzeichnenden digitalen Signale die Stromquellen (15, 16) selektierbar und die Speicher (11, 12) adressierbar sind, und daß die in der Matrix (6) angeordneten Schreibköpfe (7) mit einer Steuereinheit (5) aus steuerbaren Stromquellen (15, 16), Speichern (11, 12) und der Steuerschaltung (17) eine Baueinheit bilden, bei der die Schreibköpfe (7) auf der dem Magnetband (8) zugewandeten Seite und die Steuereinheit (5) auf der dem Magnetband (8) abgewandten Seite angeordnet sind, und daß Mittel vorgesehen sind, um in Vorversuchen ermittelte Werte von Kompensationsströmen in benachbarten Schreibköpfen (7) zu speichern und bei Selektion einer der Schreibköpfe die benachbarten Schreibköpfe mit den gespeicherten Werten der Kompensationsströmen zu bestromen.

8. Magnetbandaufzeichnungsgerät nach Anspruch 7, **dadurch gekennzeichnet, daß** die Speicher (11, 12) als digitale Speicher ausgebildet und über Analog/Digital-Wandler (13, 14) mit den Steuereingängen der Stromquellen (15, 16) verbunden sind.

9. Magnetbandaufzeichnungsgerät nach Anspruch 8, **dadurch gekennzeichnet, daß** die Speicher (11, 12) als PROM oder batteriegepuffertes RAM oder ferromagnetisches RAM oder EEPROM ausgebildet sind.

## Claims

1. Process for the recording of digital signals on a magnetic tape (8) in multiple longitudinal tracks (9) by means of recording heads (7) which are arranged in a matrix (6) and are supplied with current row-wise and column-wise in dependence on the digital signals in multiplex operation in such a way that the magnetic field resulting exclusively from row or column currents in the recording heads (7) supplied with current in each case lies below the coercive field strength of the magnetic tape (8), while the magnetic field resulting from row and column currents superposed in the same sense in the respectively selected recording heads (7) supplied with current lies above the coercive field strength of the magnetic tape (8) and produces magnetized domains, **characterized in that** for each recording head (7) a value determined in preliminary tests for the magnetizing current from row and column currents superposed in the same sense, for maintaining a desired operating point, is stored (11, 12) and, on selection, the recording heads (7) are supplied with the stored values of the magnetizing current assigned to them, and that values determined in preliminary tests for compensation currents in neighbouring recording heads (7) are additionally stored and, on selection of one of the recording heads (7), the neighbouring recording heads (7) are supplied with the stored values of the compensation currents.

2. Process according to Claim 1, **characterized in that** exclusively the values of the row currents at constant column currents or exclusively the values of the column currents at constant row currents or both the values of the row currents and the values of the column currents are stored.

3. Process according to Claim 2, **characterized in that** the values of the row currents and/or column currents are stored as absolute values.

4. Process according to Claim 2, **characterized in that** the values of the row currents and/or column currents are stored as relative deviations from a basic value.

5. Process according to Claim 4, **characterized in that** the basic value is formed by a mean value or a lower limit value or an upper limit value.

6. Process according to one of Claims 1 to 5, **characterized in that** the values are stored in digital form and are converted into analog values for the controlling of current sources (15, 16).

7. Magnetic-tape recording apparatus for carrying out the process according to Claim 1, **characterized in that** each row and/or each column of the recording heads (7) arranged in a matrix (6) is assigned a controllable current source (15, 16) and a memory (11, 12), connected to a control input of the current source (15, 16), for a current value, and **in that** a control circuit (17) by means of which the current sources (15, 16) can be selected and the memories (11, 12) can be addressed in dependence on the digital signals to be recorded is provided, and that the recording heads (7) arranged in the matrix (6) form with a control unit (5), comprising controllable current sources (15, 16), memories (11, 12) and the control circuit (17), a structural unit in which the recording heads (7) are arranged on the side facing the magnetic tape (8) and the control unit (5) is arranged on the side facing away from the magnetic tape (8), and that means are provided to store values determined in preliminary test for compensation currents in neighbouring recording heads (7) and, on selection of one of the recording heads (7), to supply the neighbouring recording heads (7) with the stored values of the compensation currents.

8. Magnetic-tape recording apparatus according to Claim 7, **characterized in that** the memories (11, 12) are designed as digital memories and are connected via analog/digital converters (13, 14) to the control inputs of the current sources (15, 16).

9. Magnetic-tape recording apparatus according to Claim 8, **characterized in that** the memories (11, 12) are designed as PROMs or battery-backed RAMs or ferromagnetic RAMS or EEPROMs.

## Revendications

1. Procédé pour l'enregistrement de signaux numériques dans une bande magnétique (8) avec multipistes (9) à l'aide de têtes d'écriture (7) placées dans une matrice (6) qui sont parcourues par le courant par lignes et par colonnes en fonction des signaux numériques en multiplexage de sorte que le champ magnétique issu exclusivement des courants de lignes ou de colonnes dans les têtes d'écriture (7) parcourues par le courant se situe toujours en dessous de la force coercitive de la bande magnétique (8) tandis que le champ magnétique issu de courants de lignes et de colonnes superposés de direction identique dans chaque tête d'écriture (7) sélectionnée parcourue par le courant se situe au-dessus de la force coercitive de la bande magnétique (8) et produit des zones magnétisées, **caractérisé en ce que** pour chaque tête d'écriture (7), une valeur du courant de magnétisation déterminée au cours d'essais préliminaires à partir des courants de lignes et de colonnes superposés de direction identique en vue de conserver un point de travail souhaité est mémorisée (11, 12), **en ce que** les têtes d'écriture (7) sont parcourues lors de la sélection par le courant de magnétisation correspondant à la valeur de courant magnétique mémorisée qui leur a été affectée, **en ce que** les valeurs de courant de compensation déterminées au cours d'essais préliminaires dans les têtes d'écriture (7) adjacentes sont mémorisées et **en ce que** les têtes d'écriture (7) adjacentes sont parcourues lors de la sélection de l'une des têtes (7) par un courant de compensation correspondant à la valeur mémorisée.

2. Procédé conforme à la revendication 1, **caractérisé en ce que** seules les valeurs des courants de lignes en cas de courants de colonnes constants, seules les valeurs des courants de colonnes en cas de courants de lignes constants ou bien les deux sont mémorisées.

3. Procédé conforme à la revendication 2, **caractérisé en ce que** les valeurs des courants de lignes et/ou de colonnes sont mémorisées en tant que valeurs absolues.

4. Procédé conforme à la revendication 2, **caractérisé en ce que** les valeurs des courants de lignes et/ou de colonnes sont mémorisées en tant qu'écarts relatifs par rapport à une valeur de base.

5. Procédé conforme à la revendication 4, **caractérisé en ce que** la valeur de base est constituée d'une valeur moyenne, d'une valeur limite inférieure ou d'une valeur limite supérieure.

6. Procédé conforme à l'une des revendications 1 à 5, **caractérisé en ce que** les valeurs sont mémorisées en numérique et converties en valeurs analogiques pour le contrôle des sources de courant (15, 16).

7. Appareil d'enregistrement pour la mise en oeuvre du procédé conforme à la revendication 1, **caractérisé en ce qu**'une source de courant contrôlable (15, 16) et une mémoire (11, 12) reliée à une entrée de commande de la source de courant (15, 16) sont affectées à chaque ligne et/ou colonne des têtes d'écriture (7) placées dans une matrice (6), en ce qu'un circuit pilote (17) grâce auquel les sources de courant (15, 16) sont sélectionnables et les mémoires (11, 12) adressables en fonction des signaux numériques à enregistrer est prévu, en ce que les têtes d'écriture (7) placées dans la matrice (6) forment, avec une unité de commande (5) constituée de sources de courant contrôlables (15, 16), de mémoires (11, 12) et d'un circuit pilote (17), un ensemble dans lequel les têtes d'écriture (7) sont placées du côté de la bande magnétique (8) et l'unité de commande (5) du côté opposé à la bande magnétique (8) et en ce que des dispositifs sont prévus pour la mémorisation de valeurs de courants de compensation déterminées au cours d'essais préliminaires dans les têtes d'écriture adjacentes (7) et les têtes d'écriture adjacentes sont parcourues par un courant de compensation correspondant à la valeur mémorisée lors de la sélection d'une tête d'écriture.

8. Appareil d'enregistrement pour la mise en oeuvre du procédé conforme à la revendication 7, **caractérisé en ce que** les mémoires (11, 12) sont configurées comme des mémoires numériques et reliées aux entrées de commande des sources de courant (15, 16) via un convertisseur analogique/numérique (13, 14).

9. Appareil d'enregistrement pour la mise en oeuvre du procédé conforme à la revendication 8, **caractérisé en ce que** les mémoires sont configurées en tant que PROM, RAM à batterie de secours, RAM ferromagnétique ou EPROM.
